# EUROPEAN PATENT SPECIFICATION

(11) **EP 0 975 229 B1**
(45) Date of publication and mention of the grant of the patent: **18.09.2002**
(21) Application number: 98906589.1
(22) Date of filing: 16.02.1998
(51) Int. Cl.: A21D 2/16, A21D 13/08

(54) **METHOD FOR MAKING REDUCED FAT DOUGH AND COMPOSITIONS RESULTING THEREFROM**
VERFAHREN ZUR HERSTELLUNG FETTREDUZIERTEN TEIGES SOWIE DARAUS ERHALTENE ZUSAMMENSETZUNGEN
PROCEDE DE FABRICATION DE PATE DE CUISSON A TENEUR ALLEGEE EN MATIERES GRASSES, ET COMPOSITIONS OBTENUES A PARTIR DE CETTE PATE

(30) Priority: 04.03.1997 US 805920
(43) Date of publication of application: 02.02.2000
(73) Proprietor: The Pillsbury Company, Minneapolis, MN 55402-1464 (US)
(72) Inventor: HUANG, Victor, T., Moundview, MN 55112 (US); PANDA, Fern, A., New Brigthon, MN 55112 (US); THOMAS, David, J., Eagan, MN 55123 (US)
(74) Representative: Gowshall, Jonathan Vallance
(86) International application number: US9803279
(87) International publication number: WO98038870

(56) References cited:
- EP-A- 0 605 217
- WO-A-95/26641
- US-A- 5 246 727
- US-A- 5 480 662
- US-A- 5 576 043

## Description

### Field of the Invention

This invention relates generally to doughs and baked goods having a reduced fat content. More particularly, this invention provides methods for making reduced fat doughs and baked goods by extending the fat in a dough with a constituent which, while extending and thereby reducing the compositional fat content, maintains many of the organoleptic properties of a fat in the dough and resulting baked good.

### Background of the Invention

Doughs typically contain flour, water, and fat, as well as various ingredients present in minor concentrations such as flavorants and leaveners. These ingredients contribute to the organoleptic properties of the product made from the dough. Flour provides texture and mouthfeel. Water provides plasticity and a reaction medium for chemicals such as leaveners. Fats provide mouthfeel, flavor, and body.

In certain instances the dough is intended to provide a baked product which has special properties once baked. Examples of these properties include flakiness, tenderness or fluffiness. These properties may be imparted in any number of ways.

One manner in which the properties of the baked good may be affected is to combine discrete forms of fat with the dough to create a dough product which attains special properties upon cooking. One example of such a dough product is laminated dough used for croissants. An example of a laminated dough system is U.S. Patent No. 5,480,662 to Boode-Boissevain et al. With a laminated dough product, the dough is rolled out and then folded with a fat source, such as butter. As the dough is folded and refolded, alternating discrete layers of dough and butter are formed to result in a layered dough product. The butter remains in discrete layers until baking. Upon baking the butter assists in providing thin flaky layers of dough with a buttery taste such as that seen in croissants.

Another example of the use of a fat source in a discrete form is with nonlaminated systems such as that disclosed in commonly assigned U.S. Patent No. 5,458,903 to Colson et al. Colson et al. teaches the use of a particular kind of fat source in the formulation of dry mixes and dough products. The Colson et al. shortenings may take the form of chips, noodles, or pellets which are suspended in the dough until baking. The form of the shortening provides the desired characteristics of a biscuit as described in the Colson reference. These discrete forms of fat are added to a dough composition in addition to the fat or shortening used when making the dough itself. The fat or shortening used when making the dough is typically referred to as "mixed dough" fat or shortening.

The use of these discrete forms of fat brings both advantages and concerns. For example the presence of fat improves organoleptic qualities of a dough or baked good such as taste, body, mouthfeel and lubricity. Additionally, the presence of fat in a baked good helps in leavening and imparts a fluffier texture to the final product. Fats may also provide a perception of moistness and tenderness after the product has been cooked and cooled.

While fats and fat sources bring very desirable characteristics to food products, fats and the digestive by-products of fats have been attributed to a number of health concerns. For example, high fat consumption may lead to obesity and the onset of certain cardiovascular problems. Therefore, it is desirable to reduce the amount of fat in a food product to facilitate a reduction in fat consumption. At the same time, removal of fat sources may compromise efforts to promote the organoleptic properties which the fat sources are intended to impart to the system.

Some methods for reducing fat in baked goods have been used previously. For example, United States Patent No. 4,510,166 to Lenchin et al. discloses the use of converted starches, combined with water to form a gel, to replace fat and oil in foodstuffs such as ice cream, salad dressing, margarine, icings and sauces. Lenchin discloses the use of converted starches with a DE of less than 5 with an aqueous dispersion of 10%-50% solids and a hot flow viscosity of 10 sec at 55°C.

All of Harris et al., United States Patent Nos. 5,374,442; 5,436,019; and 5,395,640 disclose methods for preparing reduced fat food by using starches as replacements for fat and oil in a food formulation. The methods involve the recrystallization and fragmentation of an amylose precipitate. The recrystallized, fragmented amylose is used to form an aqueous dispersion having the characteristics of a particle gel.

Chiou et al., United States Patent No. 5,378,286, discloses cream food formulations having a reduced level of fat and oil wherein a carbohydrate, such as an amylopectic starch hydrolysate, is used as a replacement for fat and oil present in the food formulation.

Stanley et al., United States Patent No. 5,409,726, discloses a method of preparing a dry blend comprising a fragmented starch hydrolysate capable of forming a particle gel in aqueous dispersion and a hydrophilic agent such as hydrophilic polymers, alkane polyols, and surfactants. The hydrophilic agent is effective to improve the redispersibility of the fragmented starch hydrolysate to form the particle gel. The particle gel can be used to replace fat and oil in a food composition.

Stankus, et al. United States Patent No. 5,576,043, describes a shortening substitute suitable for use as a roll-in shortening, made of modified and unmodified starches, at least 60 wt-% water, and an emulsifier. The shortening substitute is an oil-in-water emulsion that has a water activity of about 0.990 to 1.000.

WO-A-9526641 discloses a low fat, low calorie substitute fat food stuff emulsion and a method for making the emulsion.

Preferably, the reduction of fat content in the dough does not bring a concomitant substantial change in moisture content or dough tenderness, nor should it adversely affect dough viscosity. As a result, there is still a need for a method and composition capable of resulting in a reduced fat product and also able to provide the desirable organoleptic properties associated with a full fat product.

### Summary of the Invention

In accordance with a first aspect of the invention there is provided a method of making a reduced fat dough product. The method comprises the steps of formulating a dough composition of flour, water, and a mixed dough shortening. An extended fat is then added to the dough to create a dough product. The extended fat comprises from about 50 to 95 wt-% of a fat source and about 5 to 50 wt-% fat extender. Once combined with the dough, at least a portion of the extended fat retains a discrete form in the dough product, until the baking or cooking of the dough product.

In accordance with another aspect of the invention, there is provided a reduced fat dough product comprising a dough of flour, water, and mixture dough shortening. The dough product also comprises an extended fat. The extended fat comprises from about 50 to 95 wt-% of a fat source, and from about 5 wt-% to 50 wt-% of a fat extender. Once combined with the dough, at least a portion of the extended fat retains a discrete form in the dough product, until baking or cooking the dough product.

In accordance with a further aspect of the invention, there is provided a baked good resulting from baking the dough product of the invention.

The extended fat used in the invention is generally incorporated into the dough in discrete forms. A discrete form is intended to mean that the fat retains a discrete unmixed or unblended volume in the dough in the intended form. Common uses of discrete fat forms include laminated doughs where the dough product comprises a heterogeneous system of alternating layers of dough and extended fat. Other configurations include biscuit, cookie or pie doughs in which an extended fat source is distributed through the dough in the form of chips, noodles, or pellets to provide a heterogeneous mixture of dough and fat until baked. In the context of the invention "heterogeneous" means that the extended fat is generally evenly dispersed in the dough product but does not substantially chemically interact with the dough composition before baking. The extended fat is combined with the dough and at least a portion of the extended fat retains a discrete form in the dough product. The discrete form of the extended fat, whether laminated or nonlaminated, provides the intended properties of fats and fat sources to the baked good and yet provides a desired reduction in fat content.

The extended fat comprises a fat source and a fat extender. The fat extender serves as a diluent to reduce the fat content of the food product. The fat extender can be added to the fat source in dry powder form or as a gel, cream or emulsion. While reducing the fat content in the baked good, the fat extender also allows the fat to still provide the intended properties upon baking, such as flakiness, flavor, and moistness. The extended fat of the invention is suitable for use in refrigerated, fresh or frozen doughs.

The presence of the fat extender in the food product may also reduce water activity (A_{w}) of the dough product. A reduction in A_{w} results in an increased shelf life and microstability of the food product. The presence of the fat extender may also reduce staling and retrogradation of the food product. Preferably, the A_{w} of the uncooked dough product is less than 0.94.

Two exemplary types of fats that may be extended using the method of the invention are roll-in shortenings and chip shortenings. Roll-in shortening refers to shortening that is sandwiched between two layers of dough, followed by folding and rolling the dough so that shortening layers alternate with layers of dough to make a laminated dough. For example, to make a croissant dough, the baker places pats of butter on half of a rolled out dough piece, then folds the dough piece over to cover the butter, and rolls the dough. The dough is then repeatedly folded and rolled, forming more alternating layers of butter and dough. When this product is baked, the laminated product is flaky and tender. There are layers of dough that are easily separated, as in a croissant. Laminated doughs can be refrigerated or frozen, or can be baked directly after they are made.

Earlier attempts at making a reduced fat roll-in fat have required high amounts of moisture, making the dough too sticky. The invention extends roll-in fat by combining a fat extender with the fat source before combining the fat source with the dough composition, thereby substantially reducing or eliminating dough stickiness.

Chip shortening refers to shortening that is added to the dough as solid, discrete pieces, which substantially remain as such until the dough, such as biscuit, cookie, or pie dough, is cooked. For example, to make a biscuit dough, the baker combines the dough ingredients with a chip shortening. After adding the chip shortening (or "cutting in" the shortening chips) the dough is not worked too much so that the chip shortening retains as much of its discrete form as possible. When baked, this product is fluffy and moist, and has an outer crust with desired crispness and glossiness. These types of doughs can be refrigerated, frozen, or baked directly after they are made.

The invention extends chip shortenings by adding a fat extender directly to the fat source. The extended fat is then formed into a chip shortening using conventional methods, such as extrusion or other known means. It was found that by using the fat extending system of the invention, it is possible to make reduced fat shortening chips having a firmness similar to full fat shortening chips. Chip shortenings typically contain little or no water and are used when discrete fat pieces are desired, as in a biscuit or pie dough. The discrete fat pieces, because of their firmness, remain as such in the dough until it is baked, at which time the fat melts and gives the dough the desired organoleptic characteristics.

One advantage of the fat extending system of the invention is that the physical consistencies of the extended fat are very similar to the non-extended full fat. Fat consistency is a product of numerous elements, such as proportion of solids in the fat, the fat crystal arrangement and size, and the viscosity of the fat.

The proportion of solids in the fat is one major determinant of the fat consistency, and is typically measured as a solid fat index (or SFI) profile. SFI values for some conventional roll-in fats range from about 25 to 55 at 10°C (50°F), from about 10 to 35 at 33°C (92°F), and from about 3 to 25 at 40°C (104°F). Some conventional chip shortenings have SFI profile values ranging from about 60 to 70 at 10°C (50°F), from about 15 to 40 at 33°C (92°F), and from about 1 to 15 at 40°C (104°F). It has been surprisingly found that the SFI values of the extended fat of the invention are preferably substantially similar to the SFI values of the fat source alone.

Another measurement of fat consistency is achieved through viscosity measurements. Viscosity measurements at ambient temperature (about 25°C) are particularly useful for roll-in shortenings which must be sufficiently pliable at manufacturing temperatures to be laminated with the dough, but not so fluid that the shortening blends in with the dough layers prior to cooking the dough product. For example, the viscosity of roll-in shortenings was measured using the Instron extrusion method at room temperature. For example, viscosity measurements were taken for roll-in shortenings using an Instron Model Number 1011, with a reservoir having a 28.575 mm (1.125 inch) diameter, and a 127 mm (5 inch) long capillary extrusion tube with a diameter of 3.175 mm (1/8 inch), and extruding at rates of 2.54, 25.4, 50.8 and 127 mm (0.1, 1.0, 2.0, and 5.0 inch(es)) per minute. The viscosity measurement was determined by the linear fit of the viscosity vs. log of the shear rate graph. A nonextended fat roll-in shortening measured about 1844 Nm⁻²s (1,844,000 cps), while an extended roll-in shortening containing 15% 20 DE corn syrup solids and 85% of this same roll-in fat measured 1925 Nm⁻²s (1,925,000 cps), and another extended roll-in shortening containing 30% 20 DE corn syrup solids and 70% roll-in shortening measured 1838 Nm⁻²s (1,838,000 cps). Preferably a roll-in shortening of the invention has a room temperature viscosity similar to full-fat roll-in shortenings useful in making laminated dough products.

Viscosity measurements of chip shortenings are useful in determining the size and shape of the chip. The viscosity of a chip shortening should be high enough to form suitable chips which remain discrete in the food product as it is processed, and yet low enough to completely melt upon finally cooking the food product containing the chips. In the process of making shortening chips, a higher viscosity shortening will yield smaller chips in the form of flakes or particulates, whereas a lower viscosity shortening will yield larger chips in the form of noodles or ribbons The viscosity of chip shortenings was measured using a Kramer shear measurement device, using a 100 g sample at a compression rate of 127 mm/minute (5 inches/minute). As an example, a nonextended fat chip measured a peak at about 1014 N (228 pounds) of force. An extended fat chip containing 30% corn syrup solids and 70% of this same fat measured a peak at about 1330 N (299 pounds). The extended fat chip of the invention maintained its discrete nature when in a dough similar to a full fat chip.

An additional advantage of the invention is that the fat extender can be added directly into the fat source as a diluent for as much as 50% of the added fat in a laminated or non-laminated dough.

### Detailed Description of the Invention

The invention comprises a method of making a reduced fat dough product, including the steps of formulating a dough composition of flour, water, and mixed dough shortening and adding an extended fat to the dough to create a dough product, wherein said extended fat comprises from about 50 to 95 wt-% of a fat source and about 5 to 50 wt-% fat extender. At least a portion of the extended fat retains a discrete form in the dough product until baking.

The invention also comprises a reduced fat dough product comprising a dough of flour, water, and mixed dough shortening. The dough product also comprises an extended fat. The extended fat comprises from about 50 to 95 wt-% of a fat source, and from about 5 wt-% to 50 wt-% of a fat extender. At least a portion of the extended fat retains a discrete form in the dough product until baking.

### THE EXTENDED FAT

The invention generally comprises adding an extended fat comprising a fat source and a fat extender to a dough. The extended fat retains many of the physical properties of a similar, non-extended or full fat, and can be incorporated into the dough using methods similar to those used with full fat sources to make the dough product.

### A. The Fat Source

The fat source tends to provide enhanced palatability, physical texture, physical form, and overall organoleptic appeal to the baked product. Generally, the fat source provides a tender, fluffy mouthfeel having a light, flaky texture in the baked product. The fat source also improves the leavening and height of the baked good.

To this end, any number of fats and shortening compositions as well as physical states (including semisolid or solid) and physical forms may be used in the extended fat of the invention.

Fats useful in food products and food processing may be naturally derived or synthetic. Sources for natural fats include animals and vegetables. In the context of food preparation, fats are generally categorized as vegetable oils, animal oils and shortenings. Shortening is generally comprised of fats and fatty oils - which are made of predominately triesters of glycerol with fatty acids, commonly called triglycerides. The number of triglycerides in a given natural fat is a function of the number of fatty acids present and specificity of the enzyme systems involved in that particular fat-synthesis mechanism.

Fat and fatty oils useful in producing shortening may include cottonseed oil, rapeseed oil, ground nut oil, soybean oil, sunflower oil, sesame oil, olive oil, corn oil, safflower oil, palm oil, palm kernel oil, coconut oil, and combinations thereof.

Fat sources which are generally useful in the invention include chip shortenings such as those disclosed in U.S. Patent No. 5,458,903 to Colson et al. Chip shortenings are characterized by a minimal amount of moisture. Also useful as fat sources are butter and margarines. Butter and margarine are characterized by 16 wt-% water.

### B. Fat Extenders

The fat extender of the invention is capable of extending the fat source, and thereby reducing the fat content of products containing the resulting extended fat, while substantially retaining the organoleptic and other qualities typically attained in a full fat formulation. According to the invention, a fat source such as fats, oils and shortenings can be mixed or diluted with one or more fat extenders such as converted starch products, oligosaccharides, polyfructose compounds (such as inulin) and their hydrolysates, saccharides, polyols, hydrogenated starch hydrolysates, gums, polydextrose compounds, and mixtures thereof. These fat extenders may be incorporated into the fat source in dry powder form or as a prehydrated slurry or emulsion.

Converted starch products are generally made from starch by treatment with an enzyme, an acid, heat, and/or oxidizing agents. Using these processes, starch hydrolysates, including maltodextrin, dextrin and corn syrup solids, are made from the hydrolysis of starch. Starch is a mixture of essentially linear (amylose) and branched (amylopectin) polymers of α-D-glucopyranosyl units at various ratios depending on the starch source. Most common starches contain two types of α-D-glucopyranose polymers. Amylose is essentially a linear polymer of α-D-glucopyranosyl units attached by α-1,4 linkage(s). Amylopectin is a highly branched polymer of α-D-glucopyranosyl units containing α-1,4 linkages and α-1,6 linkages at branch points. The α-1,6 linkages in amylopectin occur at the branch points of the polymer.

Conversion of starch may be accomplished by acid, enzymes, heat, oxidizing agents, or a combination thereof. The action of acids can produce glucose along with other products. α-Amylase randomly hydrolyzes starch to a mixture of end products such as D-glucose, maltose and dextrins of various chain lengths. β-Amylase removes maltose units successively from the non-reducing end until, in the case of amylose, the reducing end is met. With amylopectin, β-amylase removes maltose units until an α-1,6 branch point is reached. Glucoamylase hydrolyzes both amylose and amylopectin, yielding α-D-glucose.

Preferably, the resulting converted starch product has a medium molecular weight from about 400 g/mole to about 3600 g/mole. A medium molecular weight converted starch product will typically absorb less water than a high molecular weight converted starch product, and will not hydrate as easily as lower molecular weight converted starch products. Useful converted starch products have a dextrose equivalent of from about 5DE to 45DE.

Converted starch products useful according to the invention include maltodextrins, corn syrup solids, and mixtures thereof. Preferably, the maltodextrins have a low molecular weight, for example, from about 900 g/mole to about 3600 g/mole and have a dextrose equivalent of about 5 DE to about 19 DE. Preferably, the corn syrup solids have a high molecular weight, for example, from about 450 g/mole to about 900 g/mole and a dextrose equivalent from about 20 DE or greater. Glucose has a dextrose equivalent of about 100 DE.

Not intending to be bound by any specific theory, it is believed that the presence of a fat extender increases the tenderness of the final baked product through gluten plasticization and retardation of starch retrogradation. The presence of the fat extender also increases the moistness of the final product through formation of viscous syrups during the cooking process.

In addition to converted starch products, other fat extenders such as saccharides can be used. Monosaccharides useful as fat extenders include glucose, fructose, galactose or combinations thereof. Disaccharides useful in the present invention include sucrose, lactose, maltose or combinations thereof. In addition to saccharides, sugar alcohols or polyols may be used as fat extenders, including sorbitol, maltitol, lactitol or combinations thereof.

The following is a table showing the exemplary ranges of percent fat extender in the fat and percent fat in a dough, based on the form of the fat being used. In the table, "CSS" refers to corn syrup solids, "MD" refers to maltodextrin. The ranges for maltodextrin also apply to saccharides, which tend to impart a sweeter flavor to the dough, and polyols, which are preferably used in combination with other extenders to balance organoleptic qualities. The fat extender may be used to replace up to about 50 wt-% of the fat and oil in the dough. As a result, the final baked product has a reduced fat content.

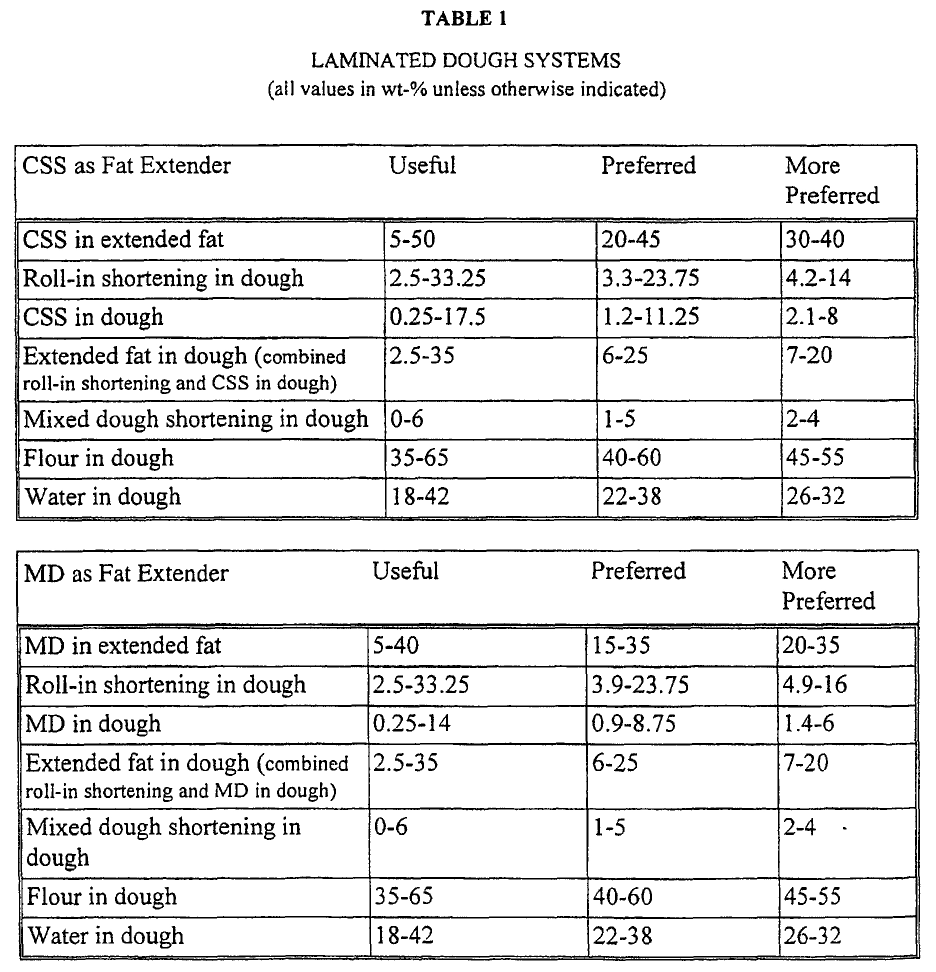

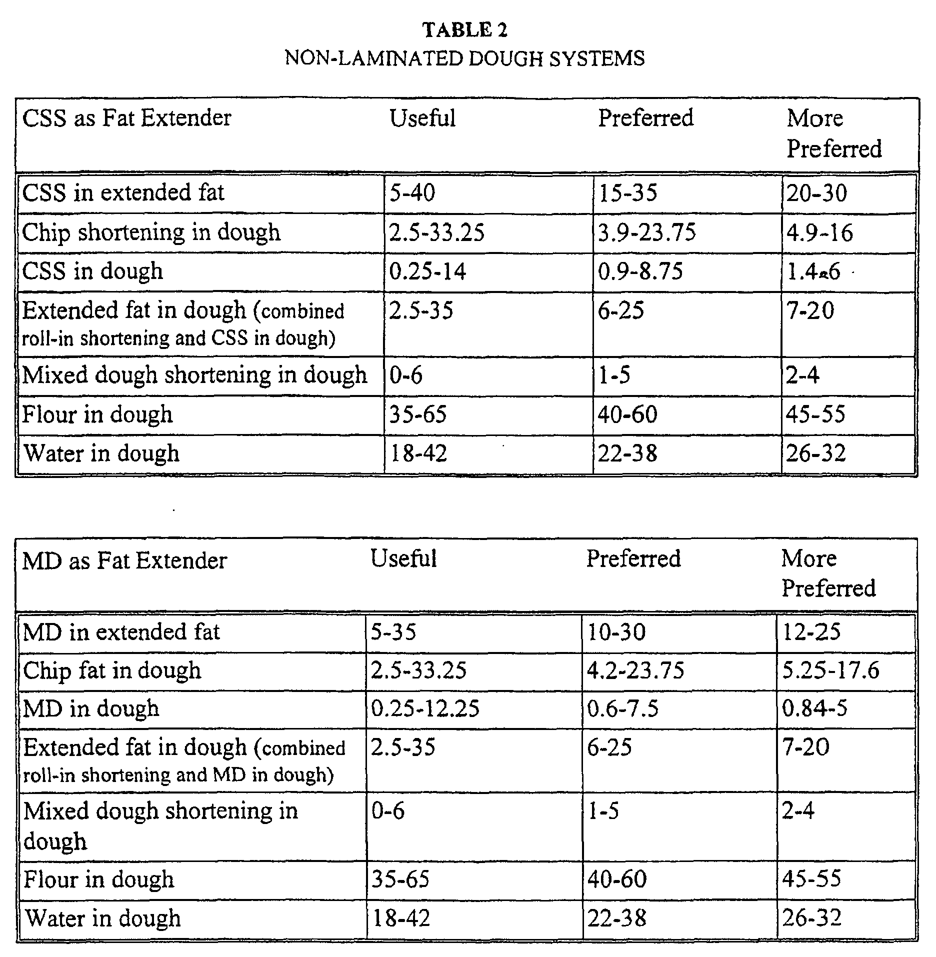

### PROCESSING

The composition of the invention may be formulated in any number of ways. Generally, the fat extender may be mixed with any number of shortening or fat compositions for use in laminated or non-laminated dough compositions. For example, the fat extender compositions of the invention may be used in roll-in shortenings which are used in laminated dough compositions. The fat extender is combined with the fat source to make the extended fat, which is then added to the dough by conventional laminated dough processes. This results in a reduced fat dough product with organoleptic properties which closely reflect that of a dough product having conventional fat concentrations.

The fats and shortenings of many doughs can be reduced by replacement with an extended fat according to the invention.

The extended fat can be made by adding the fat extender to the fat in either a dry process or a wet process. The dry process involves heating or melting the fat source, mixing in the fat extender in a dry powder form, then votating, forming and tempering the extended fat composition. Alternatively, if a solid shortening such as solid margarine is used, the solid shortening can be creamed, for example, in a twin auger with the fat extender powder and then extruded. The dry process results in an extended fat with a continuous fat phase.

The extended fat composition can then be added to the dough to reduce the overall fat content of the dough product. The dry process is preferred for low moisture fats, such as chips and flakes, but can also be used to make roll-in fats.

The wet process involves first hydrating the fat extender to form a gel or a cream. The hydrated fat extender is then added to the fat source, which may optionally be heated to increase its flowability. The components are then mixed using a twin auger or homogenizer to form a water-in-oil emulsion. Useful water concentrations in the extended fat made using this process range from 5-30 wt-%, preferably between about 10-20 wt-%. It has been found that using a homogenizer, about 10.3×10⁶Nm⁻² (1500 psi) of pressure is needed to form the emulsion. Emulsion stabilizers may be added to the composition to further stabilize the emulsion. The emulsion is then cooled, if needed, and further processed according to conventional methods. The wet process is preferred for making higher moisture extended fats, such as roll-in shortenings, but can also be used for lower moisture extended fats. The wet process also results in a continuous fat phase. The extended fat can then be added to dough to make reduced fat dough products.

The extended fats in accordance with the present invention have characteristics similar to their full-fat counterparts due in part to the fact that the extended fat has a continuous fat phase. One such characteristic is water activity. Full fat shortening, for example, had a water activity level of about 0.18 at 27°C, measured using a Decagon Aqualab CX2 measuring apparatus. An extended shortening made in using the dry process of the present invention, containing 5 wt-% 20DE corn syrup solids, had a water activity of about 0.20 at about 27°C. The water activities of extended shortenings with higher concentrations of fat extender did not deviate significantly. Using 20 wt-% 20DE corn syrup solids resulted in a water activity of 0.20 at 27°C, and using 50 wt-% resulted in a water activity of about 0.24 at 27°C. This relationship can also be seen between full fat margarines and extended margarines of the present invention. A full fat margarine, at about 26°C, had a water activity of about 0.80. An extended margarine of the present invention, made using the dry process and containing 30 wt-% 20 DE corn syrup solids, had a water activity of about 0.74 at about 26°C. Using the wet process, extending the margarine with a combination of 20 wt-% water and 30 wt-% 20DE corn syrup solids resulted in a water activity of about 0.82 at about 26°C, and with 20 wt-% water and 50 wt-% 20 DE corn syrup solids, the extended fat had a water activity of about 0.85 at about 25°C.

It was surprisingly discovered that converted starch products can be used to make the extended fat, using either the dry or wet process, which can then be added to the dough to make a dough product without adversely affecting the dough's rheological properties. Typically, starch hydrolysates added directly to a dough result in a sticky dough. To compensate for the stickiness, the conventional remedy is to reduce the water content of the dough, which ultimately results in an undesirably dry finished product.

In the invention, because the starch hydroylsate is incorporated into the extended fat composition before being combined with the dough, it is effectively sequestered from the water component of the dough and cannot substantially interact with the dough water content to make it sticky. The water concentration of the dough does not need to be significantly reduced to compensate for the effects of the added starch hydrolysate, so the resulting product has the desired moist, tender characteristics imparted by the dough's water content, but with a reduced fat content.

The extended fat can take any number of physical forms such as chips, flakes, ribbons, noodle-shaped, etc. as may be desired for a given application. When incorporated into a dough composition, the extended fat may be incorporated into the dough composition to make a dough product through standard processes. One example is to make a dough composition from flour, water and a mixed dough shortening, then to roll-in the extended fat to make the dough product. An alternative method of making a dough product is to mix the dough in two stages, the first stage including flour, mixed dough shortening and water, while the second stage includes the extended fat, and may also include various other ingredients such as flavorings and leavener.

The dough acts to provide physical stability and organoleptic properties to the foodstuff while also providing the necessary consistency and thermal stability for a foodstuff which is first baked and then refrigerated or frozen before reheating. Additionally, the dough provides a medium which is preferably compatible with any other foodstuff or topping with which it may be combined and is physically adequate to support and deliver any other foodstuff or topping.

Generally, the dough of the invention comprises a processed or unprocessed flour which may either be a white flour or a whole grain constituent. Grains useful for defining the dough of the invention include grain constituents such as flours, germ, and bran from wheat, oats, rye, sorghum, barley, rice, millet, and corn among others.

Additionally, the dough of the invention comprises water. Water functions to assist in hydrating and developing the proteins, provides vapor for leavening, and generally provides a formulatory medium for solubilizing and activating the various constituents of the mix.

Along with other constituents, the dough of the invention may also comprise a leavening agent. Leavening agents useful in the invention include air, steam, yeast, and baking powder such as those containing sodium bicarbonate and the combination of one or more baking acids with sodium bicarbonate. Leavening acids useful for chemical leavening and dough mixtures include monocalcium phosphate monohydrate, sodium aluminum phosphate, sodium acid pyrophosphate, dicalcium phosphate, dimagensium phosphate, glucono-delta-lactone, potassium hydrogen tartrate, and mixtures thereof. One or more leavening acids may be combined with the sodium bicarbonate to form the chemical leavening agent.

In addition to the ingredients described above, the dough products of the invention can include any ingredient typically added to dough, such as conditioners, flavorants, colorants, preservatives, enrichment nutrients, and the like.

Although the finished dough product has been described above as a baked dough product, the dough products of the invention can be cooked by any means, such as baking, frying, boiling or microwaving, to result in a reduced fat food product.

### WORKING EXAMPLES

The following examples further illustrate the invention. They are not meant to constitute implied or express limitations of the scope which is fully set forth in the foregoing text.

### Working Example 1

Two laminated dough formations were prepared including roll-in extended fat at various concentrations. The two compositions were then baked and taste-tested against a "full-fat" control which included a full fat-roll-in shortening and had no reduction in fat content.

| Dough Compositions (wt-%) | I | II | Control |
|---|---|---|---|
| 1st Stage | | | |
| Flour (11% protein) | 52.16 | 50.69 | 51.77 |
| Water | 31.37 | 30.00 | 31.39 |
| Mixed Dough Shortening | 2.00 | 2.00 | 2.52 |
| Minor Ingredients* | 4.45 | 4.45 | 3.26 |

| 2nd Stage | | | |
|---|---|---|---|
| Bakers Special Sugar | 4.16 | 5.81 | 4.10 |
| Dextrose | 3.0 | 4.19 | 2.98 |
| Minor Ingredients (NaCl, KCl) | 1.40 | 1.40 | 1.37 |
| Leavening agents (SALP, SAPP, | | | |
| Sodium Bicarbonate) | 1.46 | 1.46 | 2.61 |

| | | | |
|---|---|---|---|
| *Potassium Sorbate, Gums, Colorants, Monoglycerides | | | |

After formulating dough compositions I and II, four different laminated dough products 1A-D were formulated, using either of the dough compositions with two different levels of roll-in extended fat. The extended fat used to make the dough products contained 30 wt-% 20 DE corn syrup solids. The Control dough was laminated with 15 wt-% full-fat roll-in shortening. The makeup of each dough product 1A-D and the Control is shown in the table below:

**Table 3**

| Dough Product | Dough Composition | Wt-% Extended Fat | % Fat Reduction |
|---|---|---|---|
| 1A | I | 10.64 | 40% |
| 1B | I | 13.35 | 30% |
| 1C | II | 10.64 | 40% |
| 1D | II | 13.35 | 30% |
| Control | Control | None | None |

Each of the dough products 1A through 1D and the Control was baked and then compared for organoleptic properties.

In the following Table 4(4A-4D), organoleptic properties were evaluated in terms of preference. In the overall texture liking evaluation, a "1" was an inferior rating and a "9" was a superior rating. In the crispness, flakiness and dryness/moistness evaluation, the products were tested on a 5 point scale, with 3 being "just right," 1 being "not at all" and 5 being "too much".

### TABLE 4

**TABLE 4A**

| PARAMETER | Control | Dough Product 1A |
|---|---|---|
| | MEAN | MEAN |
| Texture (From Dislike to Like) | 6.3 | 6 |
| Crispness (From Not At All to Too Much) | 2.9 | 2.5 |
| Flakiness (From Not At All to Too Much) | 3.7 | 2.7 |
| Dryness/Moistness (From Too Dry to Too Moist) | 3.4 | 3.1 |

**TABLE 4B**

| PARAMETER | Control | Dough Product 1B |
|---|---|---|
| | MEAN | MEAN |
| Texture (From Dislike to Like) | 6.3 | 5.9 |
| Crispness (From Not At All to Too Much) | 2.9 | 2.6 |
| Flakiness (From Not At All to Too Much) | 3.7 | 3 |
| Dryness/Moistness (From Too Dry to Too Moist) | 3.4 | 3.3 |

**TABLE 4C**

| PARAMETER | Control | Dough Product 1C |
|---|---|---|
| | MEAN | MEAN |
| Texture (From Dislike to Like) | 6.3 | 6.4 |
| Crispness (From Not At All to Too Much) | 2.9 | 2.8 |
| Flakiness (From Not At All to Too Much) | 3.7 | 2.9 |
| Dryness/Moistness (From Too Dry to Too Moist) | 3.4 | 3.3 |

**TABLE 4D**

| PARAMETER | Control | Dough Product 1D |
|---|---|---|
| | MEAN | MEAN |
| Texture (From Dislike to Like) | 6.3 | 6.2 |
| Crispness (From Not At All to Too Much) | 2.9 | 2.9 |
| Flakiness (From Not At All to Too Much) | 3.7 | 2.8 |
| Dryness/Moistness (From Too Dry to Too Moist) | 3.4 | 3.3 |

### Working Example 2

A dough was prepared using a formula similar to Example 1. The dough was rolled out, and roll-in shortening was incorporated into the dough to make a laminated dough product. The laminated dough was then proofed, fried, cooled, and finally frozen. The same dough was used to make all three dough products, 2A-2C. The roll-in shortening used for each dough product is shown below:

| | |
|---|---|
| Dough Product | Roll-In Shortening Description |
| 2A | 7.5 wt-% full fat roll-in shortening |
| 2B | 7.5 wt-% extended roll-in shortening containing 30 wt-% 20 DE corn syrup solids (30% less fat than 2A using extended shortening) |
| 2C | 5.25 wt-% full fat roll-in shortening (30% less fat than 2A using less full fat shortening) |

Dough Product 2B showed the least fat pick-up during frying, and yet maintained a tender texture upon reheating the product.

### Working Example 3

Dough was prepared using the formulas shown below. The first stage ingredients were mixed together, followed by the addition of and mixing with the second stage ingredients. The extended chip shortening for Dough Product 3 was made according to the invention by combining 70 wt-% chip shortening with 30 wt-% 20 DE corn syrup solids. The doughs were then rolled out and cut into pieces. The dough pieces were then canned, proofed and refrigerated.

| | CONTROL | Dough Product 3 |
|---|---|---|
| First Stage | | |
| Flour | 46.18 | 46.12 |
| Water | 27.55 | 27.54 |
| Dough shortening | 2.0 | 2.0 |
| Minor ingredients* | 3.77 | 3.77 |
| | | |

| Second Stage | | |
|---|---|---|
| Leavening acids (SAPP, SALP) | 1.26 | 1.23 |
| Sodium bicarbonate | 0.94 | 0.94 |
| Salt | 1.3 | 1.3 |
| Sugar | 3.0 | 4.2 |
| Full fat chip shortening | 14.0 | 0.0 |
| Extended chip shortening with 20DECSS | 0.0 | 12.9 |

| | | |
|---|---|---|
| *(buttermilk solids, gum, potassium sorbate) | | |

The chip shortening used to make Dough Product 3 was made by combining 70% full fat chip shortening with 30% 20 DE corn syrup solids to make an extended chip shortening. This resulted in Dough Product 3 having an overall 30% fat reduction compared to the full-fat Control product.

The products were then baked. Sensory evaluation shows that both the Control and Dough Product 3 had acceptable sensory quality (moistness and fluffiness) and appearance (height and side-wall texture).

## Claims

1. A method of making a reduced fat dough product, said method comprising the steps of:
(a) formulating a dough composition of flour, water, and a mixed dough shortening; and
(b) adding an extended fat with a continuous fat phase to said dough to create a dough product,
wherein said extended fat comprises from 50 to 95 wt-% of a fat source and 5 to 50 wt-% fat extender, wherein at least some of the extended fat retains a discrete form in the dough product.

2. The method of Claim 1, wherein said dough product comprises a laminated dough and the total weight of said extended fat ranges from 2.5-35 wt-% and the weight ratio of fat source to fat extender ranges from 1:0.05 to 1:1 on a wt-% basis, based on the total composition weight.

3. The method of Claim 1, wherein said dough is not laminated and the total weight of said extended fat ranges from 2.5-35 wt-% and the weight ratio of fat source to fat extender ranges from 1:0.05 to 1:1 on a wt-% basis, based on the total composition weight.

4. The method of Claim 3, wherein the discrete form of the extended fat is selected from the group consisting of a chip, a flake, a ribbon, a noodle-like form, and mixtures thereof.

5. The method of Claim I, wherein said dough product comprises:
(a) from 35 to 65 wt-% flour;
(b) from 18 to 42 wt-% water;
(c) from 0 to 6 wt-% mixed dough shortening; and
(d) from 2.5 to 35 wt-% of an extended fat.

6. The method of Claim 5, wherein said extended fat comprises a fat source and a fat extender, said fat extender selected from the group consisting of converted starch products, oligosaccharides, polyfructose, polyfructose hydrolysates, saccharides, polyols, hydrogenated starch hydrolysates, polydextrose compounds and mixtures thereof.

7. The method of Claim 6, wherein said extended fat comprises maltodextrin present in a concentration of from 5 wt-% to 40 wt-%.

8. The method of Claim 6, wherein said extended fat comprises corn syrup solids present in a concentration of from 5 wt-% to 50 wt-%.

9. A laminated dough product resulting from the methods of Claim 7 or 8.

10. A nonlaminated dough product resulting from the methods of Claims 7 or 8.

11. A baked good resulting from baking the dough products of Claims 9 or 10.

12. A reduced fat dough product composition comprising a dough made of flour, water, and a mixed dough shortening, said dough product also comprising an extended fat with a continuous fat phase, said extended fat comprising from 50 to 95 wt-% of a fat source, and from 2.5 wt-% to 50 wt-% of a fat extender, wherein at least some of the extended fat retains a discrete form in the dough.

13. The composition of Claim 12, wherein said fat extender is selected from the group consisting of converted starch products, saccharides, polyols, and mixtures thereof.

14. The composition of Claim 13, wherein said converted starch products are selected from the group consisting of corn syrup solids, maltodextrins, starch hydrolysates, dextrose polymers, hydrogenated starch hydrolysates and mixtures thereof.

15. The composition of claim 13, wherein said saccharide compounds are selected from the group consisting of monosaccharides, disaccharides, oligosaccharides, inulin, inulin hydrolysates, and mixtures thereof.

16. The composition of claim 12, wherein said dough product comprises a laminated dough product and the total weight of said fat source and fat extender ranges from 2.5 wt-% to 35 wt-% and the weight ratio of fat source to fat extender ranges from 1.0:0.05 to 1.0:1.0 on a wt-% basis, based on the total composition weight.

17. The composition of claim 12, wherein said dough product is not laminated and the total weight of said fat source and fat extender ranges from 2.5 wt-% to 35 wt-% and the weight ratio of fat source to fat extender ranges from 1.0:0.05 to 1.0:1.0 on a wt-% basis, based on the total composition weight.

18. The composition of claim 12, wherein the discrete form of the extended fat is selected from the group consisting of a layer, a chip, a noodle-like form, a ribbon and mixtures thereof.

19. The composition of claim 13, wherein said fat extender comprises a dry powder.

20. The composition of claim 13, wherein said fat extender comprises a prehydrated gel or cream.

21. The composition of claim 20, wherein said prehydrated gel or cream comprises from 5 to 30 wt-% water.

22. The composition of claim 12, wherein said dough product comprises a laminated dough and said extended fat comprises an extended fat roll-in shortening.

23. The composition of claim 14, wherein said converted starch product has a molecular weight ranging from 400 gm/mole to 3600 gm/mole.

24. The composition of Claim 13, wherein said saccharide compound is selected from the group consisting of dextrose, fructose, glucose, sucrose, maltose, galactose, lactose, hydrogenated derivatives thereof, and mixtures thereof.

25. The composition of Claim 13, wherein said fat extended comprises a converted starch product having a dextrose equivalence value ranging from about 5 to 45 DE, the ratio of fat source to the converted starch product ranging from 1.0:0.05 to 1.0:1.0 on a wt-% basis, based on the composition as a whole.

26. A baked good resulting from baking the dough product composition of Claim 12.

27. A dough composition having reduced fat content, said dough composition comprising:
(a) from 35 wt-% to 65 wt-% flour,
(b) from 18 wt-% to 42 wt-% water,
(c) 0 wt-% to 6 wt-% mixed dough shortening; and
(d) a balance of extended fat with a continuous fat phase, said extended fat comprising a fat source and a fat extender wherein the ratio of fat source to fat extender ranges from 1.0:0.05 to 1.0:1.0, wherein at least some of the extended fat retains a discrete form in the dough.

28. The composition of Claim 27, wherein said dough comprises a laminated dough and the total weight of said fat source and fat extender ranges from 2.5 wt-% to 35 wt-%.

29. The composition of Claim 27, wherein said dough is not laminated and the total weight of said fat source and fat extender ranges from 2.5 wt-% to 35 wt-%.

30. The composition of Claim 28 or 29, wherein said fat extended comprises a starch hydrolysate having a molecular weight ranging from 400 gm/mole to 3600 gm/mole.

## Patentansprüche

1. Verfahren zur Herstellung eines fettreduzierten Teigprodukts mit folgenden Schritten:
(a) Zubereiten eimer Teigzusammensetzung aus Mehl, Wasser und einem gemischten Teigfett; und
(b) Zugeben eines gestreckten Fetts mit einer kontinuierlichen Fettphase zu dem Teig, um ein Teigprodukt zu erzeugen,
wobei das gestreckte Fett von 50 bis 95 Gewichtsprozent einer Fettquelle und 5 bis 50 Gewichtsprozent Fettstrecker enthält und zumindest ein Teil des gestreckten Fetts in dem Teigprodukt eine diskrete Form beibehält.

2. Verfahren nach Anspruch 1, **dadurch gekennzeichnet, dass**
das Teigprodukt einen laminierten Teig umfasst und das Gesamtgewicht des gestreckten Fetts im Bereich von 2,5 bis 35 Gewichtsprozent liegt und das Gewichtsverhältnis von Fettquelle zu Fettstrecker im Bereich von 1,0:0,05 bis 1:1 auf Gewichtsprozentbasis, basierend auf dem Gesamtgewicht der Zusammensetzung, liegt.

3. Verfahren nach Anspruch 1, **dadurch gekennzeichnet, dass**
der Teig nicht laminiert ist und das Gesamtgewicht des gestreckten Fetts im Bereich von 2,5 bis 35 Gewichtsprozent liegt und das Gewichtsverhältnis von Fettquelle zu Fettstrecker im Bereich von 1:0,05 bis 1:1 auf Gewichtsprozentbasis, basierend auf dem Gesamtgewicht der Zusammensetzung, liegt.

4. Verfahren nach Anspruch 3, **dadurch gekennzeichnet, dass**
die diskrete Form des gestreckten Fetts aus der Gruppe ausgewählt wird, die aus einem Chip, einer Flocke, einem Band, einer nudelartigen Form und Mischungen dieser besteht.

5. Verfahren nach Anspruch 1, **dadurch gekennzeichnet, dass**
das Teigprodukt umfasst:
(a) von 35 bis 65 Gewichtsprozent Mehl;
(b) von 18 bis 42 Gewichtsprozent Wasser;
(c) von 0 bis 6 Gewichtsprozent gemischtes Teigfett; und
(d) von 2,5 bis 35 Gewichtsprozent eines gestreckten Fetts.

6. Verfahren nach Anspruch 5, **dadurch gekennzeichnet, dass**
das gestreckte Fett eine Fettquelle und einen Fettstrecker umfasst, wobei der Fettstrecker aus der Gruppe ausgewählt ist, die aus umgewandelten Stärkeprodukten, Oligosacchariden, Polyfructose, Polyfructosehydrolysaten, Sacchariden, Polyolen, hydrierten Stärkehydrolysaten, Polydextroseverbindungen und Mischungen dieser besteht.

7. Verfahren nach Anspruch 6, **dadurch gekennzeichnet, dass**
das gestreckte Fett Maltodextrin umfasst, das in einer Konzentration von 5 Gewichtsprozent bis 40 Gewichtsprozent vorhanden ist.

8. Verfahren nach Anspruch 6, **dadurch gekennzeichnet, dass**
das gestreckte Fett Maissiruptrockenmasse in festem Zustand umfasst, die in einer Konzentration von 5 Gewichtsprozent bis 50 Gewichtsprozent vorhanden ist.

9. Laminiertes Teigprodukt, das sich aus den Verfahren der Ansprüche 7 oder 8 ergibt.

10. Nichtlaminiertes Teigprodukt, das sich aus den Verfahren der Ansprüche 7 oder 8 ergibt.

11. Backware, die sich aus dem Backen der Teigprodukte der Ansprüche 9 oder 10 ergibt.

12. Fettreduzierte Teigproduktzusammensetzung, die einen Teig umfasst, der aus Mehl, Wasser und einem gemischten Teigfett hergestellt ist, wobei das Teigprodukt außerdem ein gestrecktes Fett mit einer kontinuierlichen Fettphase umfasst und das gestreckte Fett von 50 bis 95 Gewichtsprozent einer Fettquelle und von 2,5 Gewichtsprozent bis 50 Gewichtsprozent eines Fettstreckers enthält, wobei zumindest ein Teil des gestreckten Fetts in dem Teig eine diskrete Form beibehält.

13. Zusammensetzung nach Anspruch 12, **dadurch gekennzeichnet, dass**
der Fettstrecker aus der Gruppe ausgewählt ist, die aus umgewandelten Stärkeprodukten, Sacchariden, Polyolen und Mischungen dieser besteht.

14. Zusammensetzung nach Anspruch 13, **dadurch gekennzeichnet, dass**
die umgewandelten Stärkeprodukte aus der Gruppe ausgewählt sind, die aus Maissiruptrockenmasse, Maltodextrinen, Stärkehydrolysaten, Dextrosepolymeren, hydrierten Stärkehydrolysaten und Mischungen dieser besteht.

15. Zusammensetzung nach Anspruch 13, **dadurch gekennzeichnet, dass**
die Saccharidverbindungen aus der Gruppe ausgewählt sind, die aus Monosacchariden, Disacchariden, Oligosacchariden, Inulin, Inulinhydrolysaten und Mischungen dieser besteht.

16. Zusammensetzung nach Anspruch 12, **dadurch gekennzeichnet, dass**
das Teigprodukt ein laminiertes Teigprodukt umfasst und das Gesamtgewicht der Fettquelle und des Fettstreckers im Bereich von 2,5 Gewichtsprozent bis 35 Gewichtsprozent liegt und das Gewichtsverhältnis der Fettquelle zu dem Fettstrecker im Bereich von 1,0:0,05 bis 1,0:1,0 auf Gewichtsprozentbasis, basierend auf dem Gesamtgewicht der Zusammensetzung, liegt.

17. Zusammensetzung nach Anspruch 12, **dadurch gekennzeichnet, dass**
das Teigprodukt nicht laminiert ist und das Gesamtgewicht der Fettquelle und des Fettstreckers im Bereich von 2,5 Gewichtsprozent bis 35 Gewichtsprozent liegt und das Gewichtsverhältnis der Fettquelle zu dem Fettstrecker im Bereich von 1,0:0,05 bis 1,0:1,0 auf Gewichtsprozentbasis, basierend auf dem Gesamtgewicht der Zusammensetzung, liegt.

18. Zusammensetzung nach Anspruch 12, **dadurch gekennzeichnet, dass**
die diskrete Form des gestreckten Fetts aus der Gruppe ausgewählt ist, die aus einer Schicht, einem Chip, einer nudelartigen Form, einem Band und Mischungen dieser besteht.

19. Zusammensetzung nach Anspruch 13, **dadurch gekennzeichnet, dass**
der Fettstrecker ein Trockenpulver umfasst.

20. Zusammensetzung nach Anspruch 13, **dadurch gekennzeichnet, dass**
der Fettstrecker ein vorhydriertes Gel oder eine vorhydrierte Creme umfasst.

21. Zusammensetzung nach Anspruch 20, **dadurch gekennzeichnet, dass**
das vorhydrierte Gel oder die vorhydrierte Creme von 5 bis 30 Gewichtsprozent Wasser umfasst.

22. Zusammensetzung nach Anspruch 12, **dadurch gekennzeichnet, dass**
das Teigprodukt einen laminierten Teig umfasst und das gestreckte Fett ein Einroll-Backfett mit gestrecktem Fett umfasst.

23. Zusammensetzung nach Anspruch 14, **dadurch gekennzeichnet, dass**
das umgewandelte Stärkeprodukt ein Molekulargewicht im Bereich von 400 g/mol bis 3.600 g/mol aufweist.

24. Zusammensetzung nach Anspruch 13, **dadurch gekennzeichnet, dass**
die Saccharidverbindung aus der Gruppe ausgewählt ist, die aus Dextrose, Fructose, Glucose, Sucrose, Maltose, Galactose, Lactose, hydrierten Derivaten dieser und Mischungen selbiger besteht.

25. Zusammensetzung nach Anspruch 13, **dadurch gekennzeichnet, dass**
das gestreckte Fett ein umgewandeltes Stärkeprodukt mit einem Dextrose-Äquivalenzwert im Bereich von etwa 5 bis 45 DE aufweist, wobei das Verhältnis von Fettquelle zu dem umgewandelten Stärkeprodukt im Bereich von 1,0:0,05 bis 1,0:1,0 auf Gewichtsprozentbasis, basierend auf der Zusammensetzung als Ganzes, liegt.

26. Backware, die sich aus dem Backen der Teigproduktzusammensetzung aus Anspruch 12 ergibt.

27. Teigzusammensetzung mit reduziertem Fettgehalt, umfassend:
(a) von 35 Gewichtsprozent bis 65 Gewichtsprozent Mehl;
(b) von 18 Gewichtsprozent bis 42 Gewichtsprozent Wasser;
(c) von 0 Gewichtsprozent bis 6 Gewichtsprozent gemischtes Teigfett; und
(d) eine Ausgewogenheit von gestrecktem Fett mit einer kontinuierlichen Fettphase,
wobei das gestreckte Fett eine Fettquelle und einen Fettstrecker umfasst und das Verhältnis von Fettquelle zu Fettstrecker im Bereich von 1,0:0,05 bis 1,0:1,0 liegt, wobei zumindest ein Teil des gestreckten Fetts in dem Teig eine diskrete Form beibehält.

28. Zusammensetzung nach Anspruch 27, **dadurch gekennzeichnet, dass**
der Teig einen laminierten Teig umfasst und das Gesamtgewicht der Fettquelle und des Fettstreckers im Bereich von 2,5 Gewichtsprozent bis 35 Gewichtsprozent liegt.

29. Zusammensetzung nach Anspruch 27, **dadurch gekennzeichnet, dass**
der Teig nicht laminiert ist und das Gesamtgewicht der Fettquelle und des Fettstreckers im Bereich vom 2,5 Gewichtsprozent bis 35 Gewichtsprozent liegt.

30. Zusammensetzung nach Anspruch 28 oder 29, **dadurch gekennzeichnet, dass**
das gestreckte Fett ein Stärkehydrolysat mit einem Molekulargewicht im Bereich von 400 g/mol bis 3.600 g/mol umfasst.

## Revendications

1. Un procédé pour fabriquer un produit en pâte à teneur en corps gras réduite, ledit procédé comportant les étapes de :
(a) formuler une composition en pâte de farine, d'eau et d'une matière grasse mixte pour pâte ; et
(b) ajouter un corps gras dilué avec une phase grasse continue à ladite pâte pour obtenir un produit en pâte,
dans lequel ledit corps gras dilué comporte de 50 à 95 % en poids d'une source grasse et de 5 à 50 % en poids d'un agent diluant pour corps gras, dans lequel au moins une partie du corps gras dilué conserve une forme discrète dans le produit en pâte.

2. Le procédé de la revendication 1, dans lequel ledit produit en pâte comporte une pâte feuilletée et le poids total dudit corps gras dilué est compris dans la gamme de 2,5 à 35 % en poids tandis que le rapport pondéral de la source grasse audit agent diluant les corps gras est compris entre 1:0,05 et 1:1 sur une base de pourcentage pondéral, en se basant sur le poids total de la composition.

3. Le procédé de la revendication 1, dans lequel ladite pâte n'cet pas feuilletée et le poids total du corps gras dilué est compris dans la gamme de 2,5 à 35 % en poids et le rapport pondéral de la source grasse à l'agent diluant les corps gras est compris entre 1:0,05 et 1:1 sur une base de pourcentage pondéral, en se basant sur le poids total de la composition.

4. Le procédé de la revendication 3, dans lequel la forme discrète du corps gras dilué est choisie dans le groupe constitué d'un chip, d'un flocon, d'un ruban, d'une forme de nouille et de mélange de ceux-ci.

5. Le procédé de la revendication 1, dans lequel ledit produit en pâte comporte :
(a) de 35 à 65 % en poids de farine ;
(b) de 18 à 42 % en poids d'eau ;
(c) de 0 à 6 % en poids de graisse culinaire pour pâtes mixtes ; et
(d) de 2,5 à 35 % en poids d'un corps gras dilué.

6. Le procédé de la revendication 5, dans lequel ledit corps gras dilué comporte une source grasse et un agent diluant les corps gras, ledit agent diluant les corps gras étant choisi dans le groupe constitué de produits amidonnés transformés, d'oligosaccharides, de polyfructose, d'hydrolysats de polyfructose, de saccharides, de polyols, d'hydrolysats d'amidon hydrogéné, de composés de type polydextrose et de mélanges de ceux-ci.

7. Le procédé de la revendication 6, dans lequel ledit corps gras dilué comporte de la maltodextrine présente selon une concentration de 5 % en poids à 40 % en poids.

8. Le procédé de la revendication 6, dans lequel ledit corps gras dilué comporte du sirop de maïs à l'état solide, présent selon une concentration de 5 % en poids à 50 % en poids.

9. Un produit en pâte feuilletée, obtenu selon le procédé de la revendication 7 ou 8.

10. Un produit en pâte non feuilletée, obtenu selon les procédés des revendications 7 ou 8.

11. Un produit cuit provenant de la cuisson des produits en pâte selon les revendications 9 ou 10.

12. Une composition de produit en pâte à teneur en corps gras réduite, comportant une pâte réalisée à partir de farine, d'eau et d'une matière grasse mixte pour pâte, ledit produit en pâte comportant également un corps gras dilué avec une phase grasse continue, ledit corps gras dilué comportant de 50 à 95 % en poids d'une source grasse et de 2,5 % à 50 % en poids d'un agent diluant les corps gras, dans lequel au moins une partie du corps gras dilué conserve une forme discrète dans la pâte.

13. La composition de la revendication 12, dans laquelle ledit agent diluant les corps gras est choisi dans le groupe constitué de produits amidonnés transformés, de saccharides, de polyols et de mélanges de ceux-ci.

14. La composition de la revendication 13, dans lequel lesdits produits amidonnés transformés sont choisis dans le groupe constitué de sirops de maïs à l'état solide, de maltodextrines, d'hydrolysats d'amidon, de polymères de dextrose, d'hydrolysats d'amidon hydrogénés et de mélanges de ceux-ci.

15. La composition de la revendication 13, dans laquelle lesdits composés de type saccharide sont choisis dans le groupe constitué de monosaccharides, de disaccharides, d'oligosaccharides, d'inuline, d'hydrolysats d'inuline et de mélanges de ceux-ci.

16. La composition de la revendication 12, dans laquelle ledit produit en pâte comporte un produit en pâte feuilletée et le poids total de ladite source grasse et de l'agent diluant les corps gras est compris entre 2,5 % en poids et 35 % en poids, tandis que le rapport pondéral de la source grasse à l'agent diluant les corps gras est compris entre 1,0:0,05 et 1,0:1,0 sur une base de pourcentage pondéral, en se basant sur le poids total de la composition.

17. La composition de la revendication 12, dans laquelle ledit produit en pâte n'cet pas feuilleté et le poids total de ladite source grasse et de l'agent diluant les corps gras est compris entre 2,5 % en poids et 35 % en poids tandis que le poids total de la source grasse à l'agent diluant les corps gras est compris entre 1,0:0,05 et 1,0:1,0 sur une base de pourcentage pondéral, en se basant sur le poids total de la composition.

18. La composition de la revendication 12, dans laquelle la forme discrète du corps gras dilué est choisie dans le groupe constitué d'une couche, d'un chip, d'une forme de nouille, d'un ruban et des mélanges de ceux-ci.

19. La composition de la revendication 13, dans laquelle ledit agent diluant les corps gras comporte une poudre sèche.

20. La composition de la revendication 13, dans laquelle ledit agent diluant les corps gras comporte une crème ou un gel préhydraté.

21. La composition de la revendication 20, dans laquelle ladite crème ou gel préhydraté comporte de 5 à 30 % en poids d'eau.

22. La composition de la revendication 12, dans laquelle ledit produit en pâte comporte une pâte feuilletée et ledit corps gras dilué comporte une matière grasse roulée en corps gras dilué.

23. La composition de la revendication 14, dans laquelle ledit produit amidonné transformé présente un poids moléculaire compris entre 400 g/mole et 3600 g/mole.

24. La composition de la revendication 13, dans lequel ledit composé de type saccharide est choisi dans le groupe constitué de dextrose, de fructose, de glucose, de saccharose, de maltose, de galactose, de lactose, de dérivés hydrogénés de ceux-ci ainsi que de mélanges de ceux-ci.

25. La composition de la revendication 13, dans laquelle ledit corps gras dilué comporte un produit amidonné transformé ayant un indice d'équivalence en dextrose compris environ entre 5 et 45 DE, le rapport de la source grasse au produit amidonné transformé étant compris entre 1,0:0,05 et 1,0:1,0 sur une base de pourcentage pondéral, en se basant sur la composition en totalité.

26. Un article cuit obtenu en cuisant une composition de produit en pâte de la revendication 12.

27. Une composition de pâte ayant une teneur en corps gras réduite, ladite composition en pâte comportant :
(a) de 35 à 65 % en poids de farine ;
(b) de 18 à 42 % en poids d'eau ;
(c) de 0 à 6 % en poids de graisse culinaire pour pâtes mixtes ; et
(d) le reste étant un corps gras dilué avec une phase grasse continue, ledit corps gras dilué comportant une source grasse et un agent diluant les corps gras,
dans lequel le rapport de la source grasse à l'agent diluant les corps gras est compris entre 1,0: 0,05 et 1,0:1,0, dans laquelle au moins une partie du corps gras dilué conforme une forme discrète dans la pâte.

28. La composition de la revendication 27, dans laquelle ladite pâte comporte une pâte feuilletée et le poids total de ladite source grasse et de l'agent diluant les corps gras est compris entre 2,5 % en poids et 35 % en poids.

29. La composition de la revendication 27, dans laquelle ladite pâte n'cet pas feuilletée et le poids total de ladite source grasse et de l'agent diluant les corps gras est compris entre 2,5 % en poids et 35 % en poids.

30. La composition de la revendication 28 ou 29, dans laquelle ledit corps gras dilué comporte un hydrolysat d'amidon ayant un poids moléculaire compris entre 400 g/mole et 3600 g/mole.
